# EUROPÄISCHE PATENTSCHRIFT

(11) **EP 2 289 708 B1**
(45) Veröffentlichungstag und Bekanntmachung des Hinweises auf die Patenterteilung: **28.12.2011**
(21) Anmeldenummer: 09010921.6
(22) Anmeldetag: 26.08.2009
(51) Int. Cl.: B44B 5/02, B44C 1/22, B23K 26/36, B23K 26/08

(54) **Verfahren zur Herstellung einer Oberflächenstruktur eines metallischen Pressbleches, Endlosbandes oder einer Prägewalze**
Method for producing a surface structure of a metallic pressed sheet, continuous ribbon or embossing roller
Procédé de fabrication d'une structure de surface d'une tôle de presse métallique, d'une bande sans fin ou d'un rouleau de gaufrage

(43) Veröffentlichungstag der Anmeldung: 02.03.2011
(73) Patentinhaber: Indaffil Holding AG, 6302 Zug (CH)
(72) Erfinder: Espe, Rolf, Dr. rer. nat., 44795 Bochum (DE); Espe, Oliver, Dipl. Des., 44795 Bochum (DE)
(74) Vertreter: Demski, Siegfried

(56) Entgegenhaltungen:
- EP-A1- 1 728 581
- EP-A2- 1 629 994
- WO-A1-2004/011187
- DE-A1- 4 033 230
- DE-A1- 10 148 759

## Beschreibung

Die Erfindung betrifft ein Verfahren zur Herstellung einer Oberflächenstruktur eines metallischen Pressbleches, Endlosbandes oder einer zylindrischen Prägewalze mit Hilfe zumindest eines Lasers sowie eine Vorrichtung zur Anwendung des Verfahrens.

Pressbleche oder Endlosbänder werden für die Produktion von Werkstoffplatten, beispielsweise Holzwerkstoffplatten, benötigt, die für die Möbelindustrie mit einem entsprechenden Dekor versehen werden. Alternative Verwendungsmöglichkeiten sind in der Produktion von Laminat-Paneelen oder Laminatbodenplatten zu sehen. Die verwendeten Werkstoffplatten weisen einen Kern aus MDF oder HDF auf, wobei zumindest einseitig verschiedene Materialauflagen aufgelegt werden, welche beispielsweise aus einer Dekorlage und einer Schutzschicht (Overlayschicht) bestehen können. Um einen Verzug der verwendeten Werkstoffplatten zu vermeiden werden in der Regel auf der Rückseite ebenfalls entsprechende Materialauflagen vorgesehen, sodass in einer Presse die Werkstoffplatte unter Verwendung der Pressbleche oder Endlosbänder miteinander verpresst werden können. Vorzugsweise werden hierbei Heißpressen eingesetzt, da die verschiedenen Materialauflagen mit Duroplastharzen, beispielsweise Melaminharz, getränkt sind und somit unter Wärmeeinwirkung zu einer Verschmelzung mit der Oberfläche des Kerns führen. Die verwendeten Dekorschichten können hierbei strukturiert sein, wobei beispielsweise ein Holz- oder Fliesendekor aufgedruckt ist oder es werden Strukturen verwendet, welche entsprechend dem jeweiligen Verwendungszweck künstlerisch gestaltet werden. Zur Verbesserung einer naturgetreuen Nachbildung, insbesondere bei Holzdekoren, Fliesendekoren oder Natursteinoberflächen, und zur Erzielung bestimmter Glanzgrade werden die Pressbleche und Endlosbänder eingesetzt, welche eine Negativabbildung der vorgesehenen Struktur aufweisen. Die Qualität der hergestellten Werkstoffplatten mit Dekorschicht und Prägemuster erreichen hierbei aufgrund einer digitalisierten Drucktechnik und digitalisierten Herstellung der Pressblechoberflächen eine hohe Genauigkeit, welche aufgrund einer passgenauen Ausrichtung einer natürlichen Holzpaneele oder vergleichbarer Materialien sehr nahe kommen. Durch die Einstellung eines bestimmten Glanzgrades wird zudem die Möglichkeit geschaffen eventuelle Reflektionen oder Schattierungen zu erzeugen, die für einen Betrachter den Eindruck einer natürlichen Holzoberfläche oder anderer Materialien nahebringen.

Zur Erzielung des oben genannten Ergebnisses wird an die Produktion der Pressbleche, Endlosbänder oder zylindrischen Prägewalzen ein hoher Qualitätsstandard gestellt, welcher insbesondere eine passgenaue Fertigung mit den vorgesehenen Dekorlagen ermöglicht. Die Pressbleche und Endlosbänder werden hierbei als Ober- und Unterwerkzeug in Kurztaktpressen, welche mit Pressblechen belegt sind, oder Doppelbandpressen bei Endlosbändern eingesetzt, wobei gleichzeitig die Prägung und Erwärmung der Materialschichten vorgenommen wird, sodass die Duroplastharze durch Aufschmelzen und Aushärten mit dem Kern verbunden werden. Die Prägewalzen werden hingegen auf der Oberfläche einer Werkstoffplatte abgerollt und ebenfalls zur Strukturierung eingesetzt.

Zur Herstellung der Pressbleche, Endlosbänder oder Prägewalzen sind aus dem Stand der Technik Verfahren bekannt, die das Aufbringen eines Ätzresist mit einer entsprechenden Strukturierung auf eine vorbehandelte metallische Oberfläche vorsehen, einem nachfolgenden Ätzvorgang, um eine erste Struktur auf die Oberfläche durch einen Ätzprozess zu erzeugen und einem anschließenden Entfernten des Ätzresist. Dieser Arbeitsvorgang kann je nach gewünschter Oberflächenqualität mehrfach hintereinander wiederholt werden, sodass eine besonders hohe Eindringtiefe in die Oberfläche des Pressbleches oder der Endlosbänder und darüber hinaus eine Grob- und Feinstrukturierung das gewünschte Strukturbild erzielt werden kann. Hierzu wird beispielsweise auf ein vorbehandeltes Blech, nach erfolgter Reinigung, eine Maske mittels eines Siebdruckverfahrens aufgetragen und anschließender Ätzung behandelt und die gewünschte Oberflächenstruktur erzeugt, wobei der Siebdruck auf die großformatigen Bleche aufgebracht und anschließend die Bleche einer vollflächigen Oberflächenätzung unterzogen werden. Sämtliche Bereiche, welche die erhabenen Oberflächenstrukturen bilden, sind hierbei durch die aufgetragene Maske abgedeckt, sodass eine Oberflächenätzung nur in den Bereichen erfolgen kann, die unmittelbar von der Ätzflüssigkeit angegriffen werden können. Die ausgeätzten Bereiche bilden sodann die Profiltäler der gewünschten Struktur. Nach erfolgter Ätzung wird die Oberfläche gereinigt und insbesondere die Maske entfernt, sodass durch weitere Arbeitsvorgänge die Oberfläche einem weiteren Vergütungsprozess, beispielsweise einer Hartverchromung, unterzogen werden kann.

Alternativ besteht die Möglichkeit ein Fotoverfahren zu verwenden, bei dem zunächst eine fotoempfindliche Schicht vollflächig aufgetragen wird. Diese muss anschließend entsprechend der vorgesehenen Maske zur Herstellung der Oberflächenstruktur belichtet werden. Danach ist eine Entwicklung der Fotoschicht erforderlich. Zwischendurch müssen umfangreiche Spülvorgänge erfolgen, damit die Oberfläche für die nachfolgenden Arbeitsschritte vorbereitet und gereinigt werden kann. Nach Entwicklung der Fotoschicht entsteht so eine Maske, die ebenfalls als Ätzschablone oder Ätzresist bezeichnet wird. Die Reproduzierbarkeit der auf diesem Weg hergestellten Masken ist problematisch, weil das Negativ oder Positiv zur Belichtung der lichtempfindlichen Schicht immer exakt in der gleichen Position relativ zur fotoempfindlichen Schicht positioniert werden muss, wenn mehr als ein Belichtungs- und Ätzvorgang aufeinander folgen soll, um so komplexe dreidimensionale Strukturen auf die Oberfläche eines Pressbleches oder Endlosbandes aufzubringen. Besonders problematisch ist dies dann, wenn das Negativ oder Positiv zur Belichtung der lichtempfindlichen Schicht direkt auf diese aufgelegt wird und das Negativ oder Positiv nicht an jeder Stelle der fotoempfindlichen Schicht exakt den gleichen Abstand aufweist. Die Reproduzierbarkeit des Aufbringens der Maske ist dabei insbesondere beim Fotoverfahren zur Erzielung einer hohen Abbildungsgenauigkeit nicht immer gewährleistet. Weitere Schwierigkeiten können sich dadurch ergeben, wenn eine dreidimensionale Struktur durch mehrere hintereinander erforderliche Belichtungs- und Ätzvorgänge erzielt werden soll und hierzu mehrere Masken nacheinander aufgetragen werden müssen, wobei zwischen jeder Maskenauftragung ein Ätzvorgang erfolgt. Durch die genaue Positionierung und erforderliche Anzahl von entsprechenden Masken ist somit die Herstellung der Pressbleche beziehungsweise Endlosbänder sehr aufwändig und kostenintensiv. Die Auflösung der Oberflächenstruktur ist hierbei von der aufzutragenden Maske und dem verwendeten Verfahren stark abhängig und zudem sind eine erhebliche Anzahl von Arbeitsschritten erforderlich, wobei insbesondere durch die Größe der Pressbleche beziehungsweise Endlosbänder eine aufwändige Handhabung erforderlich ist.

Neuerdings ist man dazu übergegangen anstelle eines Fotoverfahrens oder eines Siebdruckverfahrens die aufzubringende Maske unmittelbar mit beispielsweise einem Tintenstrahldrucker auf das Pressblech aufzutragen, wobei digitalisierte Daten verwendet werden. Durch diese Maßnahme ist sichergestellt, dass exakt eine genaue Abbildung mehrmals auf die gleichen Oberflächenbereiche aufgetragen werden kann, sodass eine besonders tiefe Strukturierung, dass heißt Ätzung der Oberfläche erfolgen kann. Auch bei diesem Verfahren sind jedoch eine Reihe von Atzprozessen erforderlich, welche nicht gerade als umweltfreundlich anzusehen sind.

Der vorliegenden Erfindung liegt daher die Aufgabe zugrunde, ein neuartiges Verfahren aufzuzeigen, mit dem die Oberfläche der Pressbleche und Endlosbänder bearbeitet und hierbei auf eine umweltfreundliche Technik zurückgegriffen werden kann.

Erfindungsgemäß ist zur Lösung der Verfahrensaufgabe vorgesehen, dass die Herstellung einer Oberflächenstruktur eines metallischen Pressbleches, eines Endlosbandes oder einer zylindrischen Prägewalze mit Hilfe eines Lasers erfolgt, wobei das Verfahren folgende Schritte umfasst:
- Bereitstellen und Verwendung von digitalisierten Daten einer 3D-Topografie einer abgeformten Oberflächenstruktur,
- Verwendung der digitalisierten Daten zur Positionssteuerung des wenigstens einen Lasers in einer durch eine x- und y-Koordinate aufgespannten Ebene,
- Verwendung der z-Koordinate zur Fokussierung des wenigstens einen Laserstrahls, wobei die z-Koordinate die 3D-Topografie senkrecht von oben zur Oberflächenstruktur bestimmt,
- Partielles Abtragen der Oberfläche durch den wenigstens einen Laserstrahl zur Reproduktion einer vorbestimmbaren Oberflächenstruktur.

Weitere vorteilhafte Ausgestaltungen der Erfindung ergeben sich aus den Unteransprüchen.

Gegenüber den bisher verwendeten Techniken werden die Pressbleche, Endlosbänder und Prägewalzen mit Hilfe eines Lasers strukturiert, wobei der Laser unmittelbar die zu erzielende Oberflächenstruktur durch partielles Abtragen der Oberfläche erzeugt. Diese Vorgehensweise besitzt eine Vielzahl von Vorteilen. Zunächst ist darauf hinzuweisen, dass mit dieser Methode auf einen Ätzvorgang verzichtet werden kann, es sei denn, dass eine Nachätzung nach Herstellung der Oberflächenstruktur mittels Lasers zur Abrundung der Kanten gewünscht wird.

Darüber hinaus kann ein Laserstrahl mittels digitalisierter Daten exakt gesteuert werden, sodass eine nahezu identische Reproduktion der Oberflächenstruktur wiederholt vorgenommen werden kann. Hierzu besteht lediglich die Notwendigkeit digitalisierte Daten einer 3D-Topografe zur Verfügung zu stellen, welche die abgeformte Oberflächenstruktur wiedergeben. Die vorliegenden Daten werden dann zur Steuerung des Lasers und/oder eines Laserschlittens in einer Ebene verwendet, die durch eine x- und y-Koordinate aufgespannt wird, sodass mit Hilfe der Daten der Laser in eine bestimmte Position verfahren werden kann. Um eine gewünschte Tiefenstruktur erzielen zu können, werden darüber hinaus die Daten (z-Koordinate) dazu verwendet, die Fokussierung des Laserstrahls in der Tiefe stetig zu verändern, sodass entsprechend der gewählten Oberflächenstruktur die Ausbildung von erhabenen und tieferliegenden Bereichen erzielt werden kann. Somit besteht die Möglichkeit mit Hilfe eines Lasers ein partielles Abtragen der Oberfläche vorzunehmen und dies bei gleichbleibender hoher Genauigkeit mit einer sehr guten Auflösung sowohl in x- und y-Richtung der Ebene als auch in der Höhe (z-Koordinate). Durch das erfindungsgemäße Verfahren kann hierbei eine Grobstrukturierung der Oberfläche, aber ebenso eine Feinstrukturierung der Oberfläche vorgenommen werden, sodass ein Ätzvorgang entbehrlich ist und dieser nur dann durchgeführt zu werden braucht, wenn beispielsweise die entstehenden Kanten und Grade zusätzlich abgerundet werden müssen.

Ein weiterer wesentlicher Vorteil ergibt sich dadurch, dass durch die digitalisierten Daten eine Reproduzierbarkeit der Oberflächen beliebig oft möglich ist und dies ohne aufwändige Kontrollmaßnahmen, wobei eine Überwachungstätigkeit des Bedienungspersonals auf ein Minimum beschränkt werden kann.

Als weiterer Vorteil ist der Verzicht auf aufwändige und umweltbelastende Ätzverfahren zu nennen.

Zur Beschleunigung der Oberflächenbearbeitung können hierbei mehrere Laser zur Bearbeitung in einer Koordinatenrichtung in der Ebene eingesetzt werden, welche gemeinsam in Richtung der weiteren Koordinate in der Ebene fortbewegt werden. Somit kann eine deutliche Reduzierung der Bearbeitungszeit bei großformatigen Pressblechen und Endlosbändern bewirkt werden. Bei Prägewalzen reicht hingegen die Anordnung von gegebenenfalls mehreren Lasern in Richtung der Walzen längsachse aus.

In Abhängigkeit des verwendeten Lasers und der sich hieraus ergebenden Leistung des Lasers kann eine Fokussierung des Laserstrahls bis zu einer Tiefe von 250 µm gegenüber der Oberfläche erfolgen. In der Regel reicht für Pressbleche, Endlosbänder und Prägewalzen eine Tiefenstrukturierung von 100 µm aus. Durch eine entsprechend hohe Pulsfrequenz des Laserstrahls ist hierbei ein kontinuierlicher Arbeitsprozess mit einem partiellen Abtragen der Oberflächenschicht ohne Unterbrechung möglich, wobei die Führung des Laserstrahls mit Hilfe einer Laseroptik mit hoher Verstellgeschwindigkeit erfolgen kann und somit die Bearbeitungszeit reduziert.

In weiterer Ausgestaltung der Erfindung ist vorgesehen, dass die Fokussierung des zumindest einen Lasers in Abhängigkeit einer sich ergebenen Abstandsänderung zwischen Oberfläche und Laseroptik nachgeführt wird. Typischerweise werden die zu bearbeitenden Pressbleche oder Endlosbänder auf einer Bearbeitungsvorrichtung aufgelegt, welche aufgrund der Größe von beispielsweise 2,3 m in der Breite und 6 m in der Länge über die gesamte Fläche zu geringfügigen Abweichungen führen kann. Somit kann durch gleichzeitige Messung des Abstandes zwischen Laseroptik und Oberfläche ein stetiger Ausgleich hinsichtlich der vorzunehmenden Fokussierung vorgenommen werden. Durch diese Maßnahme ist gewährleistet, dass die Struktur auch bei eventuellen geringfügigen Unebenheiten des zu bearbeitenden Pressbleches oder Endlosbandes mit hoher Präzision durchgeführt werden kann. Als besonders günstig hat sich hierbei herausgestellt, dass der oder die Laserstrahlen unter einem Winkel zur Senkrechten (z-Koordinate) auf die Oberfläche auftreten sollen, damit eine präzise Bearbeitung der entstehenden Tiefenstruktur gewährleistet ist. Ähnliche Vorteile können auch bei der Bearbeitung von Prägewalzen erzielt werden, wobei die Abstandsänderung sich durch die vorliegende Krümmung ergibt und berücksichtigt werden kann.

Die Fokussierung des Laserstrahls erfolgt hierbei mit einem Durchmesser von 2 bis 10 nm, wobei in der Regel ein Faserlaser mit einer Energie von 5 bis 500 Watt, vorzugsweise 10 bis 100 Watt, besonders bevorzugt von 20 bis 40 Watt, eingesetzt wird. Als besonders vorteilhaft hat sich ein gepulster Faserlaser mit einer Leistung von 20 bis 40 Watt, einer Wellenlänge von 532 oder 1064 nm und einer Pulsenergie von 1 mJ bei einer Pulsdauer von 100 Nanosekunden und einer Folgefrequenz von 20 bis 80 kHertz herausgestellt. Mit Hilfe dieses Lasers ist eine kontinuierliche Abtragung der Oberfläche in präziser Art und Weise bei gleichzeitig schneller Laserstrahlsteuerung möglich, ohne dass nicht tolerlerbare Abbildungsfehler in der Oberfläche entstehen oder die Arbeitsgeschwindigkeit hierunter leidet.

Die zur Verwendung vorgesehenen Laser bestehen aus einer Laseranordnung mit einer Strahlaufweitungseinrichtung und einer Fokussiereinrichtung. Zunächst wird der aus dem Laser austretende Strahl durch die Strahlaufweitungseinrichtung aufgefächert und anschließend mit Hilfe der Fokussiereinrichtung erneut fokussiert, sodass eine gesteuerte Bearbeitung in der Flächenausdehnung als auch in der Tiefe vorgenommen werden kann. Die Vorgehensweise einer zunächst erfolgten Strahlaufweitung und anschließenden Fokussierung hat sich hierbei als besonders praktikabel herausgestellt, well auf diese Weise größere Flächen und Tiefen mit einer feststehenden Laserposition erfasst werden können.

Soweit Laser mit einer höheren Energie verwendet werden, kann in einer solchen Laseranordnung zusätzlich ein Laserabschwächer vorgesehen werden, welcher zwischen dem Laser und der Strahlaufweitungseinrichtung angeordnet wird, sodass der Laserstrahl in entsprechender Form abgeschwächt werden kann, bevor er nach der Strahlaufweitungseinrichtung und Fokussiereinrichtung auf die Oberfläche auftrifft. Durch diese Maßnahme ist es möglich die Laserenergie auf das gewünschte Maß zu reduzieren, welches sich zur Bearbeitung als optimal herausstellt.

Die für die Laseranordnung verwendete Fokussiereinrichtung wird hierbei in einem Abstand von 10 bis 100 cm gegenüber der Oberfläche angeordnet, wobei bei größerem Abstand eine größere Fläche von dem Laserstrahl mit gleicher Fokussiereinrichtung und stationärer Anordnung des Lasers erfasst werden kann. Unabhängig davon, ob nur ein einzelner Laser oder gegebenenfalls mehrere Laser zum Einsatz kommen, können diese jeweils nur einen Teilbereich der Oberfläche erfassen, sodass es erforderlich ist entweder die Laseranordnung gegenüber dem zu bearbeitenden Werkstück, in diesem Fall ein Pressblech oder ein Endlosband, zu verfahren oder gegebenenfalls das Werkstück selbst, bei einer stationären Position der Laseranordnung, zu verfahren. Somit besteht die Möglichkeit mehrere Teilbereiche nacheinander zu bearbeiten, um eine großflächige Strukturierung eines Endlosbandes oder eines Pressbleches zu ermöglichen. Wie bereits erwähnt hängt die hierbei wählbare Teilfläche insbesondere von der Höhe der Fokussiereinrichtung gegenüber der Oberfläche ab, sodass nach erfolgter Festlegung eines bestimmten Abstandes eine Optimierung des Lasers erfolgen kann, wobei gleichzeitig die Grundfläche eines solchen Teilbereiches durch die Fokussiereinrichtung festgelegt wird.

Aus diesem Grunde ist es erforderlich die gesamte Oberfläche eines Pressbleches mit einer Abmessung von cirka 2,3 m in der Breite und cirka 6 m in der Länge oder eines Endlosbandes in eine Vielzahl von Teilbereichen zu unterteilen, welche unabhängig von einem sich möglicherweise wiederholenden Raport der Oberflächenstruktur sind. Jeder Teilbereich kann hierbei sequentiell von einem Laser bearbeitet werden oder es werden mehrere Laser eingesetzt und somit können gleichzeitig mehrere Teilbereiche parallel bearbeitet werden. Zu diesem Zweck wird eine ortsfeste Position der Laseranordnungen gewählt und mit Hilfe der Fokussiereinrichtung der jeweilige Teilbereich abgefahren, wobei die digitalisierten Daten der 3D-Topografie verwendet werden und die x- und y-Koordinate eines solchen Teilbereiches aus den digitalisierten Daten herausgefiltert und zur Steuerung der Fokussiereinrichtung verwendet wird. Somit kann mit Hilfe der x- und y-Koordinaten der ausgewählte Teilbereich vollständig überdeckt werden, wobei sich anschließende Teilbereiche entsprechend in gleicher Form angesteuert werden können. Die Höhenstruktur wird demgegenüber durch eine Veränderung der Fokussierung in der Tiefe erzielt, sodass auch eine Abbildung der z-Koordinate gemäß der abgeformten Oberflächenstruktur möglich ist. Die hierbei festgelegten Teilbereiche in Abhängigkeit der Höhe der Laseroptik und des verwendeten Lasers können eine Kantenlänge von 10 bis 800 cm, vorzugsweise 50 bis 500 cm aufweisen. Jeder dieser festgelegten Teilbereiche wird somit mit einem Laser und einer dazu gehörigen Laseroptik bearbeitet, wobei in Einzelfällen ein einzelner Laser nacheinander sämtliche festgelegten Teilbereiche abarbeiten kann. Alternativ können mehrere Laser in einer Koordinatenrichtung und gegebenenfalls zusätzlich beabstandet in mehrfacher Anordnung in derselben Koordinatenrichtung verwendet werden.

Zur Vermeidung von Problemen im Grenzbereich der jeweiligen Teilbereiche, dies kann beispielsweise aufgrund von Ungenauigkeiten der Lagerung des Pressbleches oder Endlosbandes oder der Schlittenführung der Laseranordnung auftreten, ist im Weiteren vorgesehen, dass die Teilbereiche nicht rechtwinklig zueinander ausgerichtet sind, sondern unter Umständen einen kurvenförmigen Randbereich aufweisen, welcher bevorzugt so optimiert ausgeführt ist, dass dieser Bereiche der Oberfläche des Pressbleches oder Endlosbandes tangiert, die durch den Laser gar nicht oder nur geringfügig bearbeitet werden. Somit können mögliche Kantenprobleme im Bereich der Teilbereichgrenzen vermieden werden und führen zu einer detailgetreuen Wiedergabe der Oberflächenstruktur. Diese Vorgehensweise ist immer dann erstrebenswert, wenn großflächige Strukturen bearbeitet werden sollen, welche sich über einen wesentlichen Bereich des Pressbleches oder Endlosbandes erstrecken und in verschiedene einzelne Teilbereiche unterteilt werden müssen.

In weiterer Ausgestaltung der Erfindung ist vorgesehen, dass auf der Oberfläche Messpunkte vorgesehen sind, welche eine jederzeitige Kontrolle der Laser- und/oder Fokussiereinrichtungsposition erlauben, sodass über eine Steuerung eine Nachführung und Korrektur des Laserstrahls ermöglicht wird. Die auf der Oberfläche vorhandenen Messpunkte können durch einen Hilfslaser oder ein anderes Positionsmessverfahren erfasst und zur Korrektur der Laserstrahlführung herangezogen werden. Somit besteht die Möglichkeit auch bei großformatigen Pressblechen, Endlosbändern und Prägewalzen jederzeit eine stetige Korrektur des Laserstrahls vorzunehmen und die exakte Position auch über eine große Fläche einzuhalten.

Für das erfindungsgemäße Verfahren werden vorzugsweise digitalisierte Daten einer Oberflächenstruktur verwendet, die natürlich gewachsenen Rohstoffen, wie beispielsweise Holzoberflächen, oder natürlicher Mineralien, wie beispielsweise Natursteinoberflächen, oder künstlich hergestellter Strukturen, beispielsweise keramischer Oberflächen, nachgebildet sind. Hierbei besteht die Möglichkeit diese Oberflächenstrukturen von den betreffenden Materialien abzuformen und in digitalisierte Daten umzusetzen, sodass diese der Lasersteuerung zugeführt werden können.

Zur Erfassung der Oberflächenstrukturen wird ein 3D-Scanner vorgeschlagen, welcher die digitalisierten Daten erzeugt, wobei in einer ersten Ausführungsvariante mit Hilfe eines umlenkbaren Spiegels die gesamte Oberfläche der Vorlage naturgetreu erfasst werden kann oder durch Abtasten der gesamten Oberfläche mit Hilfe eines durch zumindest einen Spiegel umgelenkten Laserstrahls und der hieraus erhaltenen Reflexionen eine Abbildung der Oberflächenstruktur möglich ist. Alternativ kommt die Verwendung von Graustufenbildern einer Oberflächenstruktur infrage, welche zur Berechnung von digitalisierten Daten zur Festlegung einer 3D-Topografie verwendet werden können. In diesem Fall wird unter Vorgabe des Oberflächenniveaus und einer vorzusehenden Mindesttiefe für jeden Graustufenwert eine Skalierung vorgenommen, sodass bereits anhand der Graustufenbilder eine 3D-Topografie erzeugt werden kann, welche in digitalisierte Daten umgesetzt wird, die wiederum zur Ansteuerung der Lasersteuerung führen. Die hierbei gewonnenen Daten können gegebenenfalls in ein anderes Datenformat konvertiert werden, wobei durch Interpolation und Datenreduktion die Vielzahl der Daten entsprechend reduziert werden kann, sodass die Steuerung der Fokussiereinrichtung optimiert werden kann. Soweit Graustufenbilder verwendet werden können diese durch eine Bildaufnahme, beispielsweise einer Digitalkamera, erstellt werden, wobei anschließend durch Entfernen des Bildrauschens durch manuelle oder EDV-unterstützte Nachbearbeitung eine 8 Bit-Map des Graustufenbildes erhalten wird.

Das vorgesehene erfindungsgemäße Verfahren wird dadurch abgerundet, dass die Pressbleche, Endlosbänder oder Prägewalzen einer Vorbehandlung unterzogen werden, hierbei kann es sich um eine mechanische Säuberung und eine Reinigung mit Isopropanol, Ethanol oder Spiritus handeln. Des Weiteren kann eine Behandlung mit einem Primer, beispielsweise eine organische Silyl-Verbindung, erfolgen, um eine besonders reine Oberfläche zu erzielen, welche anschließend mit Hilfe des Laserstrahls bearbeitet werden kann. Des Weiteren besteht die Möglichkeit, dass vor der Bearbeitung mittels Laserstrahls die Oberfläche des Pressbleches, Endlosbandes oder der Prägewalze einer chemischen Vorbehandlung unterzogen wird, damit Reflektionen vermieden werden.

Nach erfolgter Strukturierung der Pressbleche, Endlosbänder beziehungsweise Prägewalzen können diese zur Nachbehandlung mit einer oder mehreren Beschichtungen versehen werden. Beispielsweise können die Pressbleche, Endlosbänder oder Prägewalzen ganzflächig verchromt werden, vorzugsweise hart verchromt oder mit diamantartigem Kohlenstoff oder mit Titanborid beschichtet werden, damit eine lange Standzeit der Pressbleche, Endlosbänder und Prägewalzen erzielt wird. In speziellen Verfahren kann zusätzlich durch weitere Maßnahmen ein gewünschter Glanzgrad der Oberfläche durch Nachbehandlung der verchromten Oberfläche erzielt werden, beispielsweise mechanische Polierung, Sandstrahlen oder ähnliche Verfahren oder es können weitere Schichten, insbesondere Chromschichten aufgetragen werden, welche zu unterschiedlichen Glanzgraden führen.

Die Bearbeitung der Pressbleche, Endlosbänder oder Prägewalzen kann hierbei annähernd in einer horizontalen aber ebenso in einer vertikalen Position erfolgen, je nach dem welche Laseranordnung verwendet werden soll und welche Bearbeitungsmethode als günstige Vorgehensweise angesehen wird.

Aus der DE 40 33 230 A1 ist eine Vorrichtung zur Strukturierung einer Oberfläche von Pressplatten und/oder Endlosbändern bekannt. Hierzu wird lediglich offenbart, dass die erforderlichen Prägegravuren entsprechend einem vorgegebenen Muster mit Hilfe von Laserstrahlen unmittelbar oder mittelbar auf die Pressplatten und/oder die Endlosbänder aufgebracht werden. Zu diesem Zweck wird eine Vorrichtung zur Bewegung eines umlaufenden Endlosbandes und ein Laserstrahlkopf aufgezeigt, welcher durch einen Rechner angesteuert wird, sodass ein Laserstrahl senkrecht zum Endlosband eine Oberflächenstrukturierung vornehmen kann. Hierzu wird eine einfache Anordnung verwendet, welche keine besonderen Maßnahmen zur Ausbildung einer 3D-Topografie mit guten Auflösungseigenschaften offenbart.

Zur Durchführung des erfindungsgemäßen Verfahrens wird ferner eine Vorrichtung vorgeschlagen, welche eine Auflageeinrichtung für die zu bearbeitenden Materialien, zumindest einen Laser mit Strahlaufweitungs- und Fokussiereinrichtung und einer Schlittenführung zur Bewegung der Laseranordnung in eine beliebige Position innerhalb einer durch eine x- und y-Koordinate aufgespannten Ebene sowie unabhängige Antriebselemente zum Anfahren der Position und einer Steuereinheit umfasst, welche zur Positionsanfahrung und Fokussierung der Laseroptik vorgesehen ist, sodass ein Laserstrahl zielgerichtet auf die Oberfläche des Pressbleches oder des Endlosbandes gerichtet werden kann und entsprechend der vorgegebenen 3D-Topografie eine Reproduktion der Oberflächenstruktur erzeugen kann, wobei die Ansteuerung der x- und y- Koordinaten durch vorgegebene digitalisierte Daten einer 3D-Topografie einer abgeformten Oberflächenstruktur erfolgt und die z-Koordinate zur Fokussierung des wenigstens einen Laser verwendbar ist, wobei die z-Koordinate die 3D-Topografie senkrecht von oben zur Oberflächenstruktur bestimmt und mit Hilfe des wenigstens einen Lasers die Oberfläche partiell abtragbar ist.

Die erfindungsgemäße Vorrichtung kann hierbei mit mehreren Laseranordnungen ausgestattet sein, welche im Einzelnen zumindest aus einem Laser mit Strahlaufweitungs- und Fokussiereinrichtung bestehen und in einer Koordinatenrichtung in der Ebene angeordnet sind. Diese Laseranordnungen können hierbei zur Bearbeitung eines Pressbleches oder eines Endlosbandes in einer Koordinatenrichtung der Ebene angeordnet und gemeinsam in Richtung der weiteren Koordinatenrichtung der Ebene verfahren werden, sodass die Bearbeitung der vollständigen Oberfläche ermöglicht wird. Zur Beschleunigung des Verfahrens können weitere Laseranordnungen, beabstandet zueinander, angeordnet werden, welche parallel betrieben werden.

Die Fokussiereinrichtung eines jeden Lasers wird hierzu in einem Abstand von 10 bis 100 cm gegenüber der Oberfläche angeordnet und kann somit eine Fläche mit einer Kantenlänge von 10 bis 800 cm, vorzugsweise 50 bis 500 cm mittels der Fokussiereinrichtung erfassen. Somit besteht die Möglichkeit sämtliche Laseranordnungen oder gegebenenfalls nur eine einzelne Laseranordnung in eine feste Position gegenüber dem Pressblech oder dem Endlosband zu verfahren und anschließend eine Bearbeitung des vorgesehenen Teilbereiches vorzunehmen. Nach Beendigung dieser Bearbeitung kann die gesamte Laseranordnung schrittweise verfahren werden, bis die gesamte Oberfläche des Pressbleches oder Endlosbandes bearbeitet worden ist. Je mehr Laseranordnungen zur Bearbeitung der Oberfläche eingesetzt werden, um so rationeller ist das Verfahren der Oberflächenbearbeitung durchzuführen, wobei es sich empfiehlt eine oder mehrere Laseranordnungen in einer Koordinatenrichtung anzuordnen und diese schrittweise in die weitere Koordinatenrichtung zu verfahren.

Damit Unebenheiten des aufgelegten Pressbleches oder Endlosbandes vermieden werden ist eine Vielzahl von Teilflächen auf den Auflageflächen ausgebildet, wobei innerhalb der Teilflächen Ansaugöffnungen für eine Vakuumansaugeinrichtung vorhanden sind. Somit können die Pressbleche über die Ansaugöffnungen angesaugt werden und führen zu einem optimalen Halt und einer Fixierung der jeweiligen Position, wobei gleichzeitig sichergestellt ist, dass eventuelle Unebenheiten der Pressbleche oder Endlosbänder bis auf geringfügige Abweichungen ausgeglichen werden können. Soweit geringfügige Abweichungen vorhanden sind, können diese mit Hilfe einer Abstandskontrolle zur Oberfläche und einer entsprechenden Regelung der Fokussiereinrichtung erfasst und ausgeglichen werden. Zur Bearbeitung ist hierbei vorgesehen, dass die Pressbleche oder Endlosbänder in einer horizontalen oder vertikalen Position bearbeitet und in dieser ebenen Position mit Hilfe der Vakuumansaugeinrichtung gehalten werden. Der hierbei verwendete Arbeitstisch weist demzufolge eine plangeschliffene Oberfläche auf, um mögliche Ungenauigkeiten in der Höhe von vornherein auszuschließen.

Letztendlich betrifft die vorliegende Erfindung die Verwendung eines Pressbleches, Endlosbandes oder einer zylindrischen Prägewalze, hergestellt nach dem erfindungsgemäßen Verfahren und unter Verwendung der erfindungsgemäßen Vorrichtung, zum Verpressen und/oder Prägen von Werkstoffplatten mit einer strukturierten Oberfläche, welche eine präzise Struktur erfordern.

Die Erfindung wird im Weiteren anhand eines Ausführungsbeispiels nochmals beschrieben und eine Vorrichtung zur Durchführung des erfindungsgemäßen Verfahrens aufgezeigt.

Es zeigt
- Fig. 1: in einer oberen Ansicht ein unbearbeitetes Pressblech im Quer- schnitt und in einer darunter befindlichen Ansicht ein strukturiertes Pressblech nach Bearbeitung durch einen Laserstrahl und
- Fig. 2: in einer Seitenansicht eine Vorrichtung zur Durchführung des erfindungsgemäßen Verfahrens.

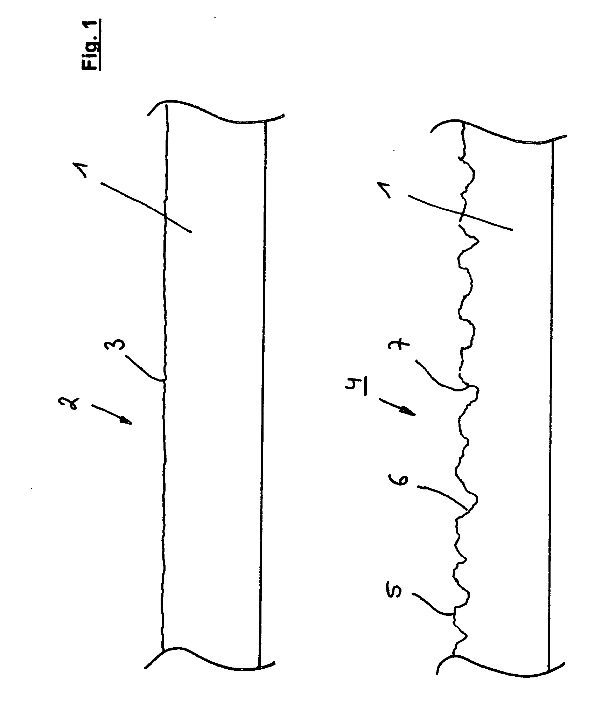

Figur 1 zeigt in einer oberen geschnittenen Teilansicht ein Pressblech 1, welches typischerweise aus einem Metall besteht. Die zu bearbeitende Oberfläche 2 weist vor der Bearbeitung eine entsprechend dem Herstellungsverfahren übliche Oberflächenrauhigkeit 3 auf. Nach erfolgter Vorreinigung des Pressbleches 1 wird durch das erfindungsgemäße Laserverfahren eine Oberflächenstruktur 4 erzeugt, welche sich durch erhabene Bereiche 5 und tiefer liegende Bereiche 6 gemäß der unteren Teilansicht auszeichnet. Sowohl die erhabenen Bereiche 5 als auch die tieferliegenden Bereiche 6 weisen im Weiteren eine Feinstrukturierung 7 auf. Die gesamte Strukturierung der Oberfläche des Pressbleches 1 wird hierbei mit Hilfe des erfindungsgemäßen Laserverfahrens erzeugt, wobei durch entsprechende Steuerung der Fokussiereinrichtung (Laseroptik) eine Fokussierung des Laserstrahls in der Tiefe erfolgt. Darüber hinaus erfolgt mit Hilfe der Fokussiereinrichtung eine Erfassung eines bestimmten Teilbereiches des Pressbleches zur Bearbeitung bevor ein Versatz der Laseranordnung gegenüber dem Pressblech 1 vorgenommen werden. Die Figur 1 zeigt hierbei eine Feinstrukturierung 7 und eine Grobstrukturierung, welche zur besseren Verdeutlichung schematisch dargestellt wurde, wobei jedoch davon auszugehen ist, dass das Tiefenprofil in einer Größenordnung von bis zu 250 µm, vorzugsweise 100 µm ausgebildet ist.

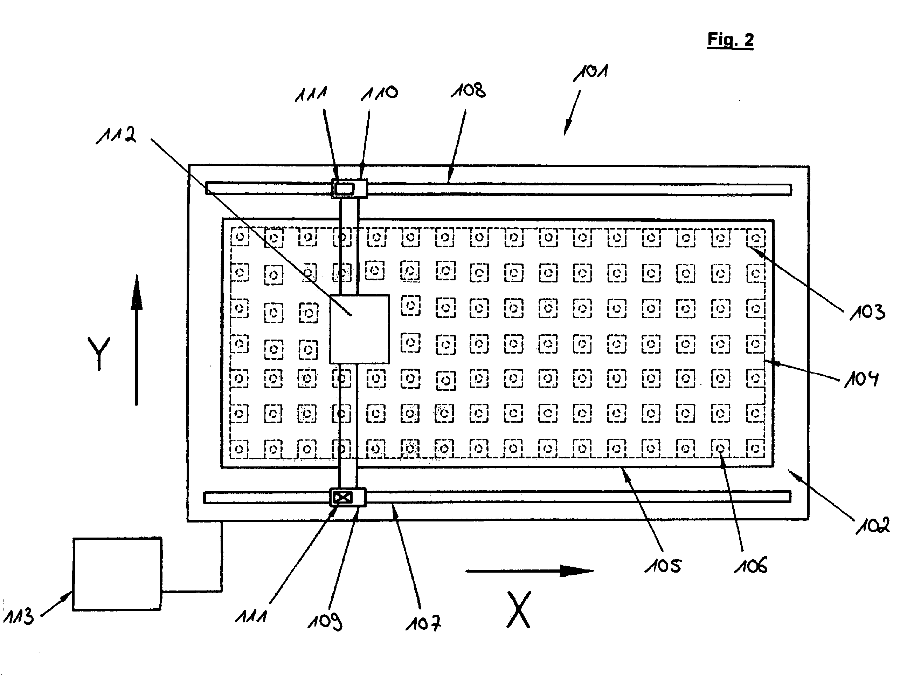

Figur 2 zeigt in einer Draufsicht eine Vorrichtung 101 zur Anwendung des erfindungsgemäßen Verfahrens. Die Vorrichtung besteht aus einem Auflagetisch 102 mit einer aus einer Vielzahl von einzelnen Planflächen 103 hergestellten Auflagefläche 104, auf der ein Pressblech 105 aufliegt. In den Planflächen 103 ist jeweils eine Ansaugöffnung 106 ausgebildet, die mit Hilfe einer nicht dargestellten Vakuumpumpe das Pressblech 105 auf die Planflächen 103 zieht und somit eine unverrückbare Position des Pressblechs 105 während des gesamten Arbeitsprozesses gewährleistet.

Im gezeigten Ausführungsbeispiel ist die Vorrichtung 101 in einer horizontalen Position angeordnet, es besteht jedoch ohne weiteres die Möglichkeit, diese in einer vertikalen Position oder in einer zur vertikal geneigten Position anzuordnen, um die Bearbeitung des Pressblechs 105 vorzunehmen. Entlang der größten Ausdehnung des Pressblechs 105 sind Führungsschienen 107, 108 ausgebildet, auf denen Gleitführungen 109, 110 entlang verfahrbar sind, und zwar mit Hilfe eines Antriebsmotors 111, 112, welche über eine Steuereinrichtung 113, vorzugsweise eine EDV-unterstützte Steuereinrichtung, angesteuert werden. Mit Hilfe der Antriebsmotoren 111, 112 wird eine Laseranordnung in Richtung der X-Achse und der Y-Achse verfahren. Die Laseranordnung 114 besteht aus einem Laser, einer Strahlaufweitungseinrichtung und einer Fokussiereinrichtung, wobei gegebenenfalls je nach verwendeter Art von Laser ein Laserabschwächer zusätzlich eingesetzt werden kann. Mit Hilfe der Laseranordnung oder gegebenenfalls einer Vielzahl von Lasern in einer Koordinatenrichtung, welche nebeneinander angeordnet sind, kann somit eine Bearbeitung der Oberfläche des Pressbleches 105 vorgenommen werden. Zur Beschleunigung des Verfahrens können hierbei mehrere Laseranordnungen in einer Reihe, das heißt in einer Koordinatenrichtung gegebenenfalls in einem vordefinierten Abstand zu dieser Reihe angeordnet werden, welche jeweils gleichzeitig ihre entsprechenden Teilbereiche der Oberfläche des Pressbleches 105 bearbeiten können, sodass eine Optimierung mit entsprechender Zeitverkürzung der Arbeitszeit erfolgen kann.

### Bezugszeichenliste

- 1: Pressblech
- 2: Oberfläche
- 3: Oberflächenrauhigkeit
- 4: Oberflächenstruktur
- 5: erhabener Bereich
- 6: tieferliegender Bereich
- 7: Feinstrukturierung
- 101: Vorrichtung
- 102: Auflagetisch
- 103: Planfläche
- 104: Auflagetisch
- 105: Pressblech
- 107: Führungsschiene
- 108: Führungsschiene
- 109: Gleitführung
- 110: Gleitführung
- 111: Antriebsmotor
- 112: Antriebsmotor
- 113: Steuereinrichtung
- 114: Laseranordnung

## Patentansprüche

1. Verfahren zur Herstellung einer Oberflächenstruktur eines metallischen Pressbleches (1), Endlosbandes oder einer zylindrischen Prägewalze mit Hilfe zumindest eines Lasers, umfassend die Schritte:
- Bereitstellen und Verwendung von digitalisierten Daten einer 3D-Topografie einer abgeformten Oberflächenstruktur,
- Verwendung der digitalisierten Daten zur Positionssteuerung des wenigstens einen Lasers in einer durch eine x- und y-Koordinate aufgespannten Ebene,
- Verwendung der z-Koordinate zur Fokussierung des wenigstens einen Laserstrahls, wobei die z-Koordinate die 3-D Topografie senkrecht von oben zur Oberflächenstruktur bestimmt,
- Partielles Abtragen der Oberfläche durch den wenigstens einen Laserstrahl zur Reproduktion einer vorbestimmbaren Oberflächenstruktur.

2. Verfahren zur Herstellung einer Oberflächenstruktur nach Anspruch 1,
**dadurch gekennzeichnet,**
**dass** mehrere Laser zur Bearbeitung in einer Koordinatenrichtung in der Ebene eingesetzt werden und gemeinsam in Richtung der weiteren Koordinate fortbewegt werden.

3. Verfahren zur Herstellung einer Oberflächenstruktur nach Anspruch 1 oder 2,
**dadurch gekennzeichnet,**
**dass** eine Fokussierung des wenigstens einen Laserstrahls bis zu 250 µm gegenüber der Oberfläche in der Tiefe erfolgt.

4. Verfahren zur Herstellung einer Oberflächenstruktur nach Anspruch 3,
**dadurch gekennzeichnet,**
**dass** die Fokussierung des zumindest einen Lasers in Abhängigkeit einer sich ergebenen Abstandsänderung zwischen Oberfläche und Laseroptik nachgeführt wird.

5. Verfahren zur Herstellung einer Oberflächenstruktur nach einem der Ansprüche 1 bis 4,
**dadurch gekennzeichnet,**
**dass** der oder die Laserstrahlen unter einem Winkel zur Senkrechten (z-Koordinate) auf die Oberfläche auftreffen.

6. Verfahren zur Herstellung einer Oberflächenstruktur nach einem der Ansprüche 1 bis 5,
**dadurch gekennzeichnet,**
**dass** eine Fokussierung des Laserstrahls auf einen Durchmesser von 2 bis 10 nm erfolgt.

7. Verfahren zur Herstellung einer Oberflächenstruktur nach einem der Ansprüche 1 bis 6,
**dadurch gekennzeichnet,**
**dass** ein Faserlaser mit einer Energie von 5 bis 500 Watt, vorzugsweise 10 bis 100 Watt, besonders bevorzugt von 20 bis 40 Watt, eingesetzt wird.

8. Verfahren zur Herstellung einer Oberflächenstruktur nach einem der Ansprüche 1 bis 7,
**dadurch gekennzeichnet,**
**dass** ein gepulster Faserlaser mit einer Leistung von 20 bis 40 Watt, einer Wellenlänge von 532 bis 1064 nm und einer Pulsenergie von 1 mJ bei einer Pulsdauer von 100 Nanosekunden mit einer Folgefrequenz von 20 bis 80 kHertz eingesetzt wird.

9. Verfahren zur Herstellung einer Oberflächenstruktur nach einem der Ansprüche 1 bis 8,
**dadurch gekennzeichnet,**
**dass** die Laseranordnung aus einem Laser, einer Strahlaufweitungseinrichtung und einer Fokussiereinrichtung (Laseroptik) besteht.

10. Verfahren zur Herstellung einer Oberflächenstruktur nach einem der Ansprüche 1 bis 9,
**dadurch gekennzeichnet,**
**dass** die Energie der oder des Lasers durch einen Laserabschwächer reduziert wird.

11. Verfahren zur Herstellung einer Oberflächenstruktur nach einem der Ansprüche 1 bis 10,
**dadurch gekennzeichnet,**
**dass** die Fokussiereinrichtung in einem Abstand von 10 bis 100 cm gegenüber der Oberfläche angeordnet ist.

12. Verfahren zur Herstellung einer Oberflächenstruktur nach einem der Ansprüche 1 bis 11,
**dadurch gekennzeichnet,**
**dass** die Oberflächenstruktur unabhängig eines sich wiederholenden Raports in Teilbereiche unterteilt wird, welche jeweils sequentiell von einem Laser bearbeitet werden oder zumindest teilweise von mehreren Lasern parallel bearbeitet werden.

13. Verfahren zur Herstellung einer Oberflächenstruktur nach einem der Ansprüche 1 bis 12,
**dadurch gekennzeichnet,**
**dass** die Grenzen der Teilbereiche frei wählbar, vorzugsweise in derart festgelegt werden, dass die Grenzen mit unbearbeiteten Bereichen der Oberfläche zusammenfallen.

14. Verfahren zur Herstellung einer Oberflächenstruktur nach einem der Ansprüche 1 bis 13,
**dadurch gekennzeichnet,**
**dass** die festgelegten Teilbereiche in Abhängigkeit des verwendeten Lasers eine Kantenlänge von 10 bis 800 cm, vorzugsweise 50 bis 500 cm aufweisen.

15. Verfahren zur Herstellung einer Oberflächenstruktur nach einem der Ansprüche 1 bis 14,
**dadurch gekennzeichnet,**
**dass** die festgelegten Teilbereiche mit einem Laser und einer zugehörigen Laseroptik bearbeitet werden.

16. Verfahren zur Herstellung einer Oberflächenstruktur nach einem der Ansprüche 1 bis 15,
**dadurch gekennzeichnet,**
**dass** auf der Oberfläche Messpunkte vorgesehen sind, welche eine jederzeitige Kontrolle der Laser- und/oder Fokussiereinrichtungsposition erlauben, sodass eine Korrektursteuerung erfolgen kann,

17. Verfahren zur Herstellung einer Oberflächenstruktur nach einem der Ansprüche1 bis 16,
**gekennzeichnet durch** die Verwendung von digitalisierten Daten einer Oberflächenstruktur die natürlich gewachsenen Rohstoffen, wie beispielsweise Holzoberflächen, oder natürlicher Mineralien, insbesondere Natursteinoberflächen, oder künstlich hergestellter Strukturen, beispielsweise keramischer Oberflächen, nachgebildet sind.

18. Verfahren zur Herstellung einer Oberflächenstruktur nach einem der Ansprüche 1 bis 17,
**dadurch gekennzeichnet**,
**gekennzeichnet durch** die Verwendung eines 3D-Scanners zur Erfassung der digitalisierten Daten, welcher mit Hilfe umlenkbarer Spiegel die gesamte Oberfläche der Vorlage naturgetreu erfasst oder **durch** Abtasten der gesamten Oberflächestruktur mit Hilfe eines **durch** zumindest einen Spiegel umgelenkten Laserstrahls und der hieraus erhaltenen Reflexionen erfasst, oder **durch** die Verwendung von Graustufenbildern einer Oberflächenstruktur zur Berechnung von digitalisierten Daten zur Festlegung einer 3D-Topografie.

19. Verfahren zur Herstellung einer Oberflächenstruktur nach einem der Ansprüche 1 bis 18,
**gekennzeichnet durch** eine Konvertierung der erfassten digitalen Daten, insbesondere **durch** Interpolation und Datenreduktion zur Steuerung der Laseroptik.

20. Vorrichtung zur Anwendung des Verfahrens nach einem der Ansprüche 1 bis 19, umfassend eine Auflageeinrichtung für die zu bearbeitenden Materialien, zumindest einen Laser mit Strahlaufweitungs- und Fokussiereinrichtung und einer Schlittenführung zur Bewegung der Laseranordnung in eine beliebige Position innerhalb einer durch eine x- und y-Koordinate aufgespannten Ebene sowie unabhängige Antriebselemente zum Anfahren der Position und einer Steuereinheit, welche zur Positionsanfahrung und Fokussierung der Laseroptik vorgesehen ist,
**dadurch gekennzeichnet,**
**dass** die Ansteuerung der x- und y- Koordinaten durch vorgegebene digitalisierte Daten einer 3D-Topografie einer abgeformten Oberflächenstruktur erfolgt und die z-Koordinate zur Fokussierung des wenigstens einen Laser verwendbar ist, wobei die z-Koordinate die 3D-Topografie senkrecht von oben zur Oberflächenstruktur bestimmt und mit Hilfe des wenigstens einen Lasers die Oberfläche partiell abtragbar ist.

21. Vorrichtung nach Anspruch 20,
**dadurch gekennzeichnet,**
**dass** ein oder mehrere Laseranordnungen (114) bestehend aus einem Laser mit Strahlaufweitungs- und Fokussiereinrichtung in einer Koordinatenrichtung in der Ebene angeordnet und gemeinsam in Richtung der weiteren Koordinate verfahrbar sind.

22. Vorrichtung zur nach einem der Ansprüche 20 oder 21,
**dadurch gekennzeichnet,**
**dass** die Fokussiereinrichtung in einem Abstand von 10 bis 100 cm gegenüber der Oberfläche angeordnet ist und eine Fläche mit einer Kastenlänge von 10 bis 800 cm, vorzugsweise 50 bis 500 cm, erfasst.

23. Vorrichtung nach Anspruch 20, 21 oder 22,
**dadurch gekennzeichnet,**
**dass** die Auflageeinrichtung eine ebene Planfläche (103) aufweist, welche in eine Vielzahl von Teilflächen unterteilt ist und innerhalb der Teilflächen über Ansaugöffnungen für eine Vakuumansaugeinrichtung verfügt.

## Claims

1. Method of producing a surface structure of a metallic pressing plate (1), continuous belt or cylindrical embossing roller with the aid of at least one laser, comprising the steps of:
- providing and using digitalized data of a 3D-topography of a formed surface structure,
- using the digitalized data for the position control of the at least one laser in a plane spanned by an x- and an y-coordinate,
- using the z-coordinate for focusing the at least one laser beam, wherein the z-coordinate defines the 3D-topography perpendicularly from above to the surface structure,
- partially removing the surface by the at least one laser beam for reproducing a predeterminable surface structure.

2. Method of producing a surface structure according to claim 1,
**characterized in that**
several lasers are employed in the plane for processing in one coordinate direction and are moved forward together in the direction of the further coordinate.

3. Method of producing a surface structure according to claim 1 or 2,
**characterized in that**
the at least one laser beam is focused up to 250 µm with respect to the surface in the depth.

4. Method of producing a surface structure according to claim 3,
**characterized in that**
focusing of the at least one laser is guided depending on a resulting change of the distance between the surface and the laser optic.

5. Method of producing a surface structure according to one of claims 1 to 4,
**characterized in that**
the laser beam or laser beams impinge on the surface at an angle to the vertical (z-coordinate).

6. Method of producing a surface structure according to one of claims 1 to 5,
**characterized in that**
the laser beam is focused to a diameter of 2 to 10 nm.

7. Method of producing a surface structure according to one of claims 1 to 6,
**characterized in that**
a fibre laser with an energy of 5 to 500 watts, preferably 10 to 100 watts, particularly preferred 20 to 40 watts, is employed.

8. Method of producing a surface structure according to one of claims 1 to 7,
**characterized in that**
a pulsed fibre laser with a power of 20 to 40 watts, a wavelength of 532 or 1064 nm, and a pulse energy of 1 mJ at a pulse duration of 100 nanoseconds with a repetition rate of 20 to 80 kHz is employed.

9. Method of producing a surface structure according to one of claims 1 to 8,
**characterized in that**
the laser arrangement consists of a laser, a beam expansion means and a focusing means (laser optic).

10. Method of producing a surface structure according to one of claims 1 to 9,
**characterized in that**
the energy of the laser or the lasers is reduced by a laser reducer.

11. Method of producing a surface structure according to one of claims 1 to 10,
**characterized in that**
the focusing means is arranged at a distance of 10 to 100 cm with respect to the surface.

12. Method of producing a surface structure according to one of claims 1 to 11,
**characterized in that**
the surface structure is divided into partial areas independent of a repeating, the partial areas being each sequentially processed by a laser or at least partially processed by several lasers in parallel.

13. Method of producing a surface structure according to one of claims 1 to 12,
**characterized in that**
the boundaries of the partial areas can be freely selected, preferably determined such that the boundaries coincide with non-processed areas of the surface.

14. Method of producing a surface structure according to one of claims 1 to 13,
**characterized in that**
the determined partial areas have an edge length of 10 to 800 cm, preferably 50 to 500 cm, depending on the employed laser.

15. Method of producing a surface structure according to one of claims 1 to 14,
**characterized in that**
the determined partial areas are processed with a laser and a corresponding laser optic.

16. Method of producing a surface structure according to ona of claims 1 to 15,
**characterized in that**
measuring points are provided on the surface which permit a check of the position of the laser and/or focusing means at any time, so that a corrective control can be effected.

17. Method of producing a surface structure according to one of claims 1 to 16,
**characterized by**
the use of digitalized data of a surface structure which imitates naturally grown raw materials, for example wood surfaces, or natural minerals, in particular natural stone surfaces, or artificially made structures, for example ceramic surfaces.

18. Method of preparing a surface structure according to one of claims 1 to 17,
**characterized by**
the use of a 3D-scanner for detecting the digitalized data, which detects the complete surface of the pattern true to nature by means of deflectable mirrors, or detects it by scanning the complete surface structure by means of a laser beam deflected by at least one mirror and the reflexions obtained by it, or by the use of greyscale images of a surface structure for calculating digitalized data to determine a 3D-topography.

19. Method of producing a surface structure according to one of claims 1 to 18,
**characterized by**
converting the detected digital data, in particular by interpolation and data reduction, for controlling the laser optic.

20. Device for the application of the method according to one of claims 1 to 19, comprising a support means for the materials to be processed, at least one laser with a beam expansion and focusing means and a carriage guide for moving the laser arrangement to any arbitrary position within a plane spanned by an x- and y-coordinate, and independent drive elements for moving the laser arrangement to the position, and a control unit which is provided for moving to the position and focusing the laser optic,
**characterized in that**
the movement to the x- and y-coordinates is effected by given digitalized data of a 3D-topography of a formed surface structure, and the z-coordinate can be used for focusing the at least one laser, wherein the z-coordinate determines the 3D-topography perpendicularly from above to the surface structure and the surface can be partially removed by means of the at least one laser.

21. Device according to claim 20, **characterized in that** one or several laser arrangements (114), consisting of a laser with a beam expansion and focusing means, are arranged in a coordinate direction in the plane and can be moved together in the direction of the further coordinate.

22. Device according to one of claims 20 or 21,
**characterized in that**
the focusing means is arranged at a distance of 10 to 100 cm with respect to the surface and covers a surface with an edge length of 10 to 800 cm, preferably 50 to 500 cm.

23. Device according to claim 20, 21 or 22,
**characterized in that**
the support means comprises a plane end face (103) which is divided into a plurality of partial areas and has suction holes for a vacuum suction means within the partial areas.

## Revendications

1. Procédé de fabrication d'une structure de surface d'une tôle emboutie métallique (1), d'une bande sans fin ou d'un rouleau de gaufrage cylindrique à l'aide d'au moins un laser, comportant les étapes suivantes :
- mise à disposition et utilisation de données numérisées d'une topographie 3D d'une structure de surface formée,
- utilisation des données numérisées pour la commande de position d'au moins un laser dans un plan tendu par des axes des x et des y,
- utilisation de l'axe des z pour la focalisation d'au moins un faisceau laser, l'axe des z déterminant la topographie 3D verticalement du haut vers la structure de surface,
- prélèvement partiel de la surface par au moins un rayon laser pour la reproduction d'une structure de surface prédéterminable.

2. Procédé de fabrication d'une structure de surface selon la revendication 1, **caractérisé par le fait que** plusieurs lasers sont utilisés pour le traitement dans l'axe des coordonnées dans le plan et sont déplacés en commun dans l'axe des coordonnées suivantes.

3. Procédé de fabrication d'une structure de surface selon la revendication 1 ou 2, **caractérisé par le fait qu'**une focalisation d'au moins un rayon laser s'effectue en profondeur jusqu'à 250 µm par rapport à la surface.

4. Procédé de fabrication d'une structure de surface selon la revendication 3, **caractérisé par le fait que** la focalisation d'au moins un laser est guidée en fonction d'une modification de distance atteinte entre la surface et l'optique laser

5. Procédé de fabrication d'une structure de surface selon l'une des revendications 1 à 4, **caractérisé par le fait que** le ou les faisceau(x) se rencontrent sous un angle par rapport à la verticale (axe des z) sur la surface.

6. Procédé de fabrication d'une structure de surface selon l'une des revendications 1 à 5, **caractérisé par le fait qu'**une focalisation du rayon laser s'effectue sur un diamètre de 2 à 10 nm.

7. Procédé de fabrication d'une structure de surface selon l'une des revendications 1 à 6, **caractérisé par le fait qu'**un laser à fibre d'une énergie de 5 à 500 watts, préférentiellement de 10 à 100 watts, très préférentiellement de 20 à 40 watts, est utilisé.

8. Procédé de fabrication d'une structure de surface selon l'une des revendications 1 à 7, **caractérisé par le fait qu'**un laser à filtre pulsé est utilisé, avec une puissance de 20 à 40 watts, une longueur d'ondes de 532 à 1464 nm et une énergie d'impulsion de 1 mJ pour une durée d'impulsion de 100 nanosecondes avec une fréquence de répétition de 20 à 80 kHertz.

9. Procédé de fabrication d'une structure de surface selon l'une des revendications 1 à 8, **caractérisé par le fait que** l'arrangement de laser est constitué d'un laser, d'un dispositif d'élargissement du faisceau et d'un dispositif de focalisation (optique laser).

10. Procédé de fabrication d'une structure de surface selon l'une des revendications 1 à 9, **caractérisé par le fait que** l'énergie des ou du laser(s) est réduite par un atténuateur laser.

11. Procédé de fabrication d'une structure de surface selon l'une des revendications 1 à 10, **caractérisé par le fait que** le dispositif de focalisation est disposé à une distance de 10 à 100 cm par rapport à la surface.

12. Procédé de fabrication d'une structure de surface selon l'une des revendications 1 à 11, **caractérisé par le fait que** la structure de surface se divise, indépendamment d'un report récurrent, en sections qui sont traitées chacune séquentiellement par un laser ou sont traitées au moins partiellement par plusieurs lasers.

13. Procédé de fabrication d'une structure de surface selon l'une des revendications 1 à 12, **caractérisé par le fait que** les limites des sections sont choisies librement, définies préférentiellement de telle sorte que les limites coïncident avec des zones non traitées de la surface.

14. Procédé de fabrication d'une structure de surface selon l'une des revendications 1 à 13, **caractérisé par le fait que** les sections définies présentent en fonction du laser utilisé une longueur d'arête de 10 à 800 cm, préférentiellement de 50 à 500 cm.

15. Procédé de fabrication d'une structure de surface selon l'une des revendications 1 à 14, **caractérisé par le fait que** les sections définies sont traitées avec un laser et une optique laser correspondante.

16. Procédé de fabrication d'une structure de surface selon l'une des revendications 1 à 15, **caractérisé par le fait que** des points de mesure sont prévus sur la surface, permettant de contrôleur à tout moment la position du laser et/ou du dispositif de focalisation, de telle sorte qu'une commande de correction puisse être réalisée.

17. Procédé de fabrication d'une structure de surface selon l'une des revendications 1 à 16, **caractérisé par** l'utilisation de données numérisées d'une structure de surface, qui sont une reproduction de matières premières s'étant développées naturellement, comme par exemple des surfaces de bois, ou de minéraux naturels, en particulier de surfaces en pierre naturelle, et de structures fabriquées artificiellement, par exemple de surfaces en céramique.

18. Procédé de fabrication d'une structure de surface selon l'une des revendications 1 à 17, **caractérisé par** l'utilisation d'un scanner 3D pour la détection des données numérisées, qui détecte à l'aide de miroirs de renvoi la totalité de la surface du modèle de manière fidèle à l'original ou qui détecte par l'exploration de la totalité de la structure de surface à l'aide d'un faisceau de lecture renvoyé par au moins un miroir et des réflexions en étant obtenues, ou par l'utilisation d'images en niveau de gris d'une structure de surface pour le calcul de données numérisées afin de définir une topographie 3D.

19. Procédé de fabrication d'une structure de surface selon l'une des revendications 1 à 18, **caractérisé par** une conversion des données numériques détectées, en particulier par interpolation et réduction des données pour la commande de l'optique laser.

20. Dispositif destiné à l'utilisation du procédé selon l'une des revendications 1 à 19, comprenant un dispositif de support pour les matériaux à traiter, au moins un laser avec un dispositif d'élargissement du faisceau et d'un dispositif de focalisation et une glissière de chariot pour déplacer l'agencement laser dans une quelconque position à l'intérieur d'un plan tendu par des axes des x et des y ainsi que des éléments d'entraînement indépendants pour démarrer la position et une unité de commande, qui est prévue pour le démarrage de position et la focalisation de l'optique laser, **caractérisé par le fait que** la commande des axes des x et des y est effectuée par des données numérisées déterminées d'une topographie 3D d'une structure de surface formée et que l'axe des z peut être utilisé pour la focalisation d'au moins un laser, l'axe des z déterminant la topographie 3D verticalement du haut vers la structure de surface et la surface pouvant être partiellement prélevée à l'aide d'au moins un laser.

21. Dispositif selon la revendication 20, **caractérisé par le fait qu'**un ou plusieurs arrangements laser (114) constitués d'un laser avec un dispositif d'élargissement du faisceau et d'un dispositif de focalisation sont installés sur un niveau et peuvent être déplacés conjointement vers la coordonnée suivante.

22. Dispositif selon l'une des revendications 20 ou 21, **caractérisé par le fait que** le dispositif de focalisation est installé à une distance de 10 à 100 cm par rapport à la surface et une surface est détectée avec une longueur d'arête de 10 à 800 cm, préférentiellement 50 à 500 cm.

23. Dispositif selon la revendication 20, 21 ou 22, **caractérisé par le fait que** le dispositif de support présente une surface plane (103), qui est divisée en une multitude de surfaces partielles et dispose, à l'intérieur des surfaces partielles, d'ouvertures d'aspiration pour un dispositif d'aspiration à vide.
